# EUROPÄISCHE PATENTSCHRIFT

(11) **EP 2 636 303 B1**
(45) Veröffentlichungstag und Bekanntmachung des Hinweises auf die Patenterteilung: **06.09.2017**
(21) Anmeldenummer: 13157750.4
(22) Anmeldetag: 05.03.2013
(51) Int. Cl.: A01K 5/00, B01F 7/00, B26D 1/14, B26D 7/26, B26D 1/00

(54) **Verdrehsichere Futtermischwagenklinge**
Anti-twist blade for fodder mixing vehicles
Lame de chariot de mélange de fourrage anti-rotation

(30) Priorität: 06.03.2012 DE 102012101866
(43) Veröffentlichungstag der Anmeldung: 11.09.2013
(73) Patentinhaber: Frielinghaus GmbH, 58256 Ennepetal (DE)
(72) Erfinder: Stein, Joachim, 58285 Gevelsberg (DE)
(74) Vertreter: REHBERG HÜPPE + PARTNER

(56) Entgegenhaltungen:
- EP-A1- 0 987 201
- EP-A2- 0 865 727
- US-A- 5 649 668
- US-A1- 2008 145 159

## Beschreibung

### TECHNISCHES GEBIET DER ERFINDUNG

Die Erfindung betrifft eine Futtermischwagenklinge für ein Misch- und Schneidwerkzeug eines Futtermischwagens.

Landwirtschaftliche Futtermischwagen weisen einen Aufnahmeraum für das durch Schneiden zu zerkleinernde und dabei zu mischende Futter auf. Bei dem Futter handelt es sich insbesondere um Pflanzen und Pflanzenteile. Für das Zerkleinern und Mischen des Futters weist der Futtermischwagen ein Misch- und Schneidwerkzeug mit an diesem angeordneten Futtermischwagenklingen auf. Das Misch- und Schneidwerkzeug wird rotierend angetrieben und zerkleinert und mischt dabei das Futter in dem Aufnahmeraum.

### STAND DER TECHNIK

Eine Futtermischwagenklinge für eine Mischschnecke eines Futtermischwagens ist aus der europäischen Patentanmeldung EP 0 865 727 A2 bekannt. Die Futtermischwagenklinge weist eine erste Oberfläche und eine zweite Oberfläche auf, wobei die erste Oberfläche mit der Mischschnecke in Kontakt kommend ausgebildet ist. Eine Durchbrechung erstreckt sich senkrecht zu den Oberflächen durch die Futtermischwagenklinge und ist mittig in diesen angeordnet. Die Durchbrechung dient für ein Befestigungsmittel zur Befestigung der Futtermischwagenklinge an der Mischschnecke des Futtermischwagens. An der ersten Oberfläche sind benachbart und beabstandet zu der Durchbrechung drei Einprägungen angeordnet, die Auflager für die Futtermischwagenklinge an der gewölbten Oberfläche der Mischschnecke bilden. Diese Auflager sind so ausgebildet, dass die Futtermischwagenklinge ausschließlich über die Auflager an der gewölbten Oberfläche der Mischschnecke anliegt.

Eine weitere Futtermischwagenklinge für eine Mischschnecke eines Futtermischwagens ist aus der europäischen Patentanmeldung EP 0 958 735 A1 bekannt. Die Futtermischwagenklinge weist eine Durchbrechung für ein Befestigungsmittel zur Befestigung der Futtermischwagenklinge an der Mischschnecke des Futtermischwagens auf. Das Befestigungsmittel ist so ausgebildet, dass sich die Futtermischwagenklinge durch im Betrieb der Mischschnecke auftretende Widerstände um das Befestigungsmittel verdreht. Somit soll eine gleichmäßige Abnutzung der mehreren Schneiden der Futtermischwagenklinge ohne die Notwendigkeit einer Demontage und anfolgenden Montage der Klinge gewährleistet sein. Die Futtermischwagenklinge wird also nicht verdrehsicher auf der Wendel der Mischschnecke, sondern vielmehr bewusst so angeordnet, dass ein Verdrehen der Futtermischwagenklinge im Betrieb der Mischschnecke erfolgt. Eine weitere Futtermischwagenklinge für eine Mischschnecke eines Futtermischwagens ist aus der europäischen Patentanmeldung EP 0 987 201 A1 bekannt.

### AUFGABE DER ERFINDUNG

Der Erfindung liegt die Aufgabe zugrunde, eine Futtermischwagenklinge für ein Misch- und Scheidwerkzeug eines Futtermischwagens bereitzustellen, mit der der Energiebedarf für den kombinierten Schnitt- und Mischvorgang bei gleichbleibender Schnittqualität reduziert wird.

### LÖSUNG

Die Aufgabe der Erfindung wird erfindungsgemäß mit den Merkmalen der unabhängigen Patentansprüche gelöst.

Weitere bevorzugte erfindungsgemäße Ausgestaltungen sind den abhängigen Patentansprüchen zu entnehmen.

### BESCHREIBUNG DER ERFINDUNG

Die Erfindung betrifft eine Futtermischwagenklinge für ein Misch- und Schneidwerkzeug, insbesondere eine Mischschnecke, eines Futtermischwagens. Die Futtermischwagenklinge weist eine Durchbrechung für ein Befestigungsmittel zur Befestigung der Futtermischwagenklinge an dem Misch- und Schneidwerkzeug des Futtermischwagens auf. Die Futtermischwagenklinge weist weiterhin ein als Verzahnung ausgebildetes Verdrehsicherungselement auf, welches benachbart zu der Durchbrechung angeordnet ist und aus einer der Oberflächen der Futtermischwagenklinge herausragt.

Die Erfindung betrifft auch ein Misch- und Schneidwerkzeug für einen Futtermischwagen mit einem Klingentragekörper, einer Mehrzahl von Befestigungsmitteln und einer Mehrzahl von Futtermischwagenklingen. Die Futtermischwagenklingen weisen jeweils eine Durchbrechung für eines der Befestigungsmittel auf und sind mit dem jeweiligen Befestigungsmittel an dem Klingentragekörper befestigt. Die Futtermischwagenklingen weisen jeweils ein als Verzahnung ausgebildetes Verdrehsicherungselement auf, welches benachbart zu der jeweiligen Durchbrechung angeordnet ist, aus einer der Oberflächen der Futtermischwagenklinge herausragt und als Verdrehsicherung an dem Klingentragekörper angreift.

### Hintergrund

Landwirtschaftliche Futtermischwagen weisen einen Aufnahmeraum für das zu mischende Futter auf, in welchem eine oder mehrere angetriebene Misch- und Schneidwerkzeuge, insbesondere eine Mischschnecke mit einer Wendel, vorgesehen sind. Im Bereich des freien Rands des Klingentragekörpers des Misch- und Schneidwerkzeug, d. h. insbesondere der Wendel, befinden sich in zumeist regelmäßigen Abständen Bohrungen. Jede Futtermischwagenklinge besitzt mindestens eine Durchbrechung, so dass sie mit einem Befestigungsmittel, insbesondere einer Schraube mit einer zugeordneten Mutter, in den Bohrungen der Wendel befestigbar ist. Die Befestigung erfolgt dabei so, dass eine Schneide, ein Teil einer Schneide bzw. eine der mehreren Schneiden der Futtermischwagenklinge über den freien Randbereich der Wendel nach außen vorsteht. Meistens besitzen die für einen derartigen Einsatzzweck bestimmten Futtermischwagenklingen eine Mehrzahl von Schneiden, um die Klinge mehrfach in unterschiedlichen Relativanordnungen an der Wendel einsetzen zu können.

In solchen Futtermischwagen werden Futterstoffe verschiedenster Art - beispielsweise Strohballen, Silage, Gras, Heu usw. - eingefüllt. Der Futtermischwagen dient dazu, die Futterstoffe mit Hilfe der Futtermischwagenklingen durch Schneiden zu zerkleinern und dabei gleichzeitig zu vermischen. Beim Betrieb des Misch- und Schneidwerkzeugs in dem Futtermischwagen ergibt sich für das zu zerkleinernde und zu mischende Futter neben diesen Wirkungen auch eine Förderwirkung, die in erster Linie auf die Mischschnecke und deren Antrieb zurückzuführen ist.

Es finden dabei im Wesentlichen zwei unterschiedliche Verfahren Einsatz. Zum einen gibt es die so genannten vertikalen Mischer, bei denen die Mischschnecke vertikal in dem Futtermischwagen angeordnet ist. Zum anderen gibt es die so genannten horizontalen Mischer, bei denen die Mischschnecke horizontal im Mischwagen angeordnet ist. Weiterhin existieren aber so genannte "Paddle-Schnecken", bei denen keine durchgehende Mischschnecke vorhanden ist, sondern das Misch- und Schneidwerkzeug mehrere separate wendelabschnittsförmige Einheiten aufweist, die beabstandet auf einer gemeinsamen zylindrischen Welle angeordnet sind.

Nach dem Erreichen einer gewissen Gebrauchsdauer sind die Schneiden der Futtermischwagenklingen stumpf, so dass die Schnittkräfte ansteigen und keine befriedigenden Schnittergebnisse mehr erreicht werden. Wenn es sich bei der Futtermischwagenklinge um eine solche mit mehreren Schneiden handelt, wird dann vom Benutzer im Stillstand der Mischschnecke das jeweilige Befestigungsmittel gelöst und die Futtermischwagenklinge so relativ zum Mischwerkzeug verdreht, bis die gewünschte andere Schneide bzw. der gewünschte andere Schneidenbereich über den Randbereich der Wendel nach außen vorsteht. Danach wird das Befestigungsmittel wieder angezogen.

Bei Futtermischwagen des Stands der Technik kommt es durch unterschiedliche Lademengen, eine variierende Konsistenz der im Futtermischwagen enthaltenen Futterstoffe und der Abnutzung der Schneiden der Klingen im Misch- und Schneidprozess immer wieder dazu, dass sich einzelne oder mehrere Klingen auf der Wendel drehen. Dadurch wird der Kraft- und Energieaufwand für den Schnitt- und Mischvorgang unnötig erhöht. Außerdem kann es bei Klingen mit mehreren definierten Schneiden dazu kommen, dass keine Schneide im richtigen Schnittwinkel auf der Wendel sitzt und somit der gewünschte Schnitteffekt überhaupt nicht mehr erreicht wird.

### Weitere Beschreibung

Diese Nachteile werden nun mit dem erfindungsgemäßen als Verzahnung ausgebildeten Verdrehsicherungselement beseitigt. Die neue Futtermischwagenklinge befindet sich im Betrieb des Misch- und Schneidwerkzeugs stets in der gewünschten Relativanordnung zum Klingentragekörper des Misch- und Schneidwerkzeugs. Diese Relativanordnung ändert sich nicht ungewollt und wird nur bewusst im Stillstand der Misch- und Schneidwerkzeugs eingestellt. Hierfür wird in bekannter Weise das Befestigungsmittel gelöst, eine Verdrehbewegung der Futtermischwagenklinge relativ zum Klingentragekörper ausgeführt und anschließend das Befestigungsmittel wieder angezogen. Beim Anziehen des Befestigungsmittels und dem entsprechenden Aufbringen einer geeigneten Montagevorspannkraft gräbt sich dann das als Verzahnung ausgebildete Verdrehsicherungselement in den Klingentragekörper ein, stellt eine kraftschlüssige bzw. kraft- und formschlüssige Verbindung zu diesem her und verhindert somit wirksam die ungewollte Relativbewegung der Klinge im Betrieb.

Das neue Verdrehsicherungselement dient also dazu, ein Verdrehen der Futtermischwagenklingen relativ zu dem Klingentragekörper des Misch- und Schneidwerkzeugs während des Betriebs des Misch- und Schneidwerkzeugs zu verhindern. Ziel ist also das Gegenteil von dem, was der oberhalb beschriebene Stand der Technik gemäß der EP 0 958 735 A1 anstrebt.

Auch aus dem oberhalb beschriebenen Stand der Technik gemäß der EP 0 865 727 A2 ist keine zusätzliche Einrichtung der Futtermischwagenklinge bekannt, die die ungewollte Relativbewegung zwischen Futtermischwagenklinge und Misch- und Schneidwerkzeug verhindert. Stattdessen werden dort lediglich Auflager geschaffen, die an die Geometrie der unebenen Wendel der dort beschriebenen Mischschnecke angepasst sind. Eine Verdrehsicherung, eine Verzahnung und ein Eingreifen in die Mischschnecke sind dort nicht beschrieben.

Das Verdrehsicherungselement ist benachbart zu der Durchbrechung angeordnet, wobei dies bedeutet, dass das Verdrehsicherungselement entweder unmittelbar an die Durchbrechung anschließt oder in einem vergleichsweise geringen Abstand dazu angeordnet ist. Das Verdrehsicherungselement ist also insbesondere nicht im Bereich der außenliegenden Schneiden der Futtermischwagenklinge angeordnet. Der Abstand kann etwa maximal 30 mm, insbesondere etwa maximal 20 mm, vom äußeren Rand der Durchbrechung betragen.

Das Verdrehsicherungselement ist als Verzahnung ausgebildet, d. h. als ein Element, welches abwechselnd mehrere erhabene Bereiche und mehrere Vertiefungen aufweist. Die erhabenen Bereiche bilden die Zähne bzw. Zahnspitzen und ragen aus der Oberfläche der Futtermischwagenklinge heraus. Sie greifen im montierten Zustand in die Oberfläche des Klingentragekörpers des Misch- und Schneidwerkzeugs ein. Bei einer entsprechenden hohen aufgebrachten Vorspannkraft des Befestigungsmittels - insbesondere einer Schraube-Mutter-Kombination - gräbt sich dann also das Verdrehsicherungselement in das Material des Klingentragekörpers ein. Dabei erfolgt eine elastische oder eine elastisch-plastische Verformung des Materials des Klingentragekörpers und/oder des Verdrehsicherungselements. Es entsteht eine kraft- und ggf. auch formschlüssige Verbindung, die eine ungewollte Relativbewegung und insbesondere Drehung der Futtermischwagenklinge relativ zu dem Mischwerkzeug wirksam verhindert.

Die Futtermischwagenklinge weist eine erste Oberfläche und eine zweite Oberfläche auf, wobei die erste Oberfläche im montierten Zustand der Futtermischwagenklinge dem Misch- und Schneidwerkzeug zugewandt ist. Das Verdrehsicherungselement ist im Bereich der ersten Oberfläche angeordnet und ragt aus dieser heraus.

Es ist jedoch ebenfalls möglich, dass ein zweites Verdrehsicherungselement im Bereich der zweiten Oberfläche angeordnet ist und aus dieser herausragt. Hierdurch ist es einerseits möglich, die Futtermischwagenklinge entweder mit der ersten Oberfläche oder mit der zweiten Oberfläche dem Klingentragekörper zugewandt zu montieren, wobei stets der Eingriff des Verdrehsicherungselements gewährleistet ist. Es kann also keine Fehlmontage erfolgen. Weiterhin ermöglicht eine solche Ausbildung, dass die Klinge an der Oberseite des Klingentragekörpers oder alternativ an der Unterseite des Klingentragekörpers befestigt wird.

Das Verdrehsicherungselement kann auch so ausgebildet sein, dass es gleichzeitig aus beiden Oberflächen der Futtermischwagenklinge herausragt.

Die Futtermischwagenklinge kann genau ein Verdrehsicherungselement aufweisen, wobei dieses dann bevorzugt unmittelbar anschließend an die Durchbrechung angeordnet ist. Es können jedoch auch zwei, drei, vier oder mehr Verdrehsicherungselemente vorhanden sein, wobei diese dann vorzugsweise beabstandet zu der Durchbrechung angeordnet sind. Weiterhin ist es möglich, dass ein Verdrehsicherungselement unmittelbar anschließend an die Durchbrechung und weitere Verdrehsicherungselemente beabstandet zur Durchbrechung angeordnet sind.

Das Verdrehsicherungselement kann eine Vielzahl von Zähnen mit spitzen Kanten aufweisen. Die spitzen Kanten stellen also in besonders günstiger Weise den gewollten sicheren Eingriff des Verdrehsicherungselements in die Oberfläche des Klingentragekörper des Werkzeugs sicher. Bei einer entsprechend hohen Vorspannkraft des Befestigungsmittels findet dann eine elastische oder sogar elastisch-plastische Verformung der Oberfläche des Klingentragekörpers statt, so dass eine kraft- und formschlüssige Verbindung zwischen Futtermischwagenklinge und dem Klingentragekörper erreicht wird.

Diese Verbindung kann noch weiter dadurch verbessert werden, dass das Verdrehsicherungselement vergütet ausgebildet ist. Das Verdrehsicherungselement weist dann also vorzugsweise eine größere Härte als die Oberfläche des Klingentragekörpers auf, so dass eine elastisch-plastische Verformung nur im Bereich der Oberfläche des Klingentragekörpers stattfindet. Ein Verschleiß des Verdrehsicherungselements auch bei einem mehrfachen Anziehen und Lösen des Befestigungsmittels und mehreren Relativanordnungen der Klinge auf dem Klingentragekörper führen also auch dann nicht zu einem nennenswerten Verschleiß des Verdrehsicherungselements, der dessen Funktionsfähigkeit außer Kraft setzt. Im Rahmen der Vergütung kann insbesondere eine induktive Härtung durchgeführt werden. Hierdurch wird die für eine Drehung der Klinge relativ zum Mischwerkzeug aufzuwendende Kraft deutlich erhöht.

Das Verdrehsicherungselement kann maximal 1,5 mm und insbesondere 0,5 mm oder weniger aus der Oberfläche der Futtermischwagenklinge herausragen. Hierdurch wird sichergestellt, dass trotz der unebenen Oberfläche des Klingentragekörpers des Werkzeugs die erforderliche Kontaktfläche zwischen Wendel und Verdrehsicherungselement bereitgestellt wird. Die Höhe des Verdrehsicherungselements wird dabei auch an die Neigung der Wendel und damit die Anzahl und Größe der Auflagepunkte an der Wendel angepasst.

Vorteilhafte Weiterbildungen der Erfindung ergeben sich aus den Patentansprüchen, der Beschreibung und den Zeichnungen. Die in der Beschreibungseinleitung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Ohne dass hierdurch der Gegenstand der beigefügten Patentansprüche verändert wird, gilt hinsichtlich des Offenbarungsgehalts der ursprünglichen Anmeldungsunterlagen und des Patents Folgendes: weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einem Verdrehsicherungselement die Rede ist, ist dies so zu verstehen, dass genau ein Verdrehsicherungselement, zwei Verdrehsicherungselemente oder mehr Verdrehsicherungselemente vorhanden sind. Wenn hingegen nur die genaue Anzahl eines Merkmals angegeben werden soll, findet das Adjektiv "genau" vor dem jeweiligen Merkmal Verwendung. Diese Merkmale können durch andere Merkmale ergänzt werden oder die einzigen Merkmale sein, aus denen das Erzeugnis besteht.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt eine erste Ansicht einer ersten beispielhaften Ausführungsform einer neuen Futtermischwagenklinge.
- **Fig. 2**: zeigt eine zweite Ansicht der Futtermischwagenklinge gemäß Fig. 1 von der anderen Seite.
- **Fig. 3**: zeigt eine Schnittansicht der Futtermischwagenklinge gemäß Linie A-A in Fig. 2.
- **Fig. 4**: zeigt eine perspektivische Ansicht der ersten beispielhaften Ausführungsform der neuen Futtermischwagenklinge.
- **Fig. 5**: zeigt eine Schnittansicht der ersten beispielhaften Ausführungsform der Futtermischwagenklinge in ihrem an einem Misch- und Schneidwerkzeug montierten Zustand.
- **Fig. 6**: zeigt eine erste Ansicht einer zweiten beispielhaften Ausführungsform der neuen Futtermischwagenklinge.
- **Fig. 7**: zeigt eine zweite Ansicht der Futtermischwagenklinge gemäß Fig. 6 von der anderen Seite.
- **Fig. 8**: zeigt eine Schnittansicht der Futtermischwagenklinge gemäß Linie A-A in Fig. 7.
- **Fig. 9**: zeigt eine perspektivische Ansicht der zweiten beispielhaften Ausführungsform der neuen Futtermischwagenklinge.
- **Fig. 10**: zeigt eine Schnittansicht der zweiten beispielhaften Ausführungsform der Futtermischwagenklinge in ihrem an einem Misch- und Schneidwerkzeug montierten Zustand.
- **Fig. 11**: zeigt eine erste Ansicht einer dritten beispielhaften Ausführungsform der neuen Futtermischwagenklinge.
- **Fig. 12**: zeigt eine zweite Ansicht der Futtermischwagenklinge gemäß Fig. 11 von der anderen Seite.
- **Fig. 13**: zeigt eine Schnittansicht der Futtermischwagenklinge gemäß Linie A-A in Fig. 12.
- **Fig. 14**: zeigt eine perspektivische Ansicht der dritten beispielhaften Ausführungsform der neuen Futtermischwagenklinge.
- **Fig. 15**: zeigt eine Schnittansicht der dritten beispielhaften Ausführungsform der Futtermischwagenklinge in ihrem an einem Misch- und Schneidwerkzeug montierten Zustand.
- **Fig. 16**: zeigt eine erste Ansicht einer vierten beispielhaften Ausführungsform der neuen Futtermischwagenklinge.
- **Fig. 17**: zeigt eine zweite Ansicht der Futtermischwagenklinge gemäß Fig. 16 von der anderen Seite.
- **Fig. 18**: zeigt eine Schnittansicht der Futtermischwagenklinge gemäß Linie A-A in Fig. 17.
- **Fig. 19**: zeigt eine Schnittansicht der Futtermischwagenklinge gemäß Linie B-B in Fig. 17.
- **Fig. 20**: zeigt eine Schnittansicht der Futtermischwagenklinge gemäß Linie C-C in Fig. 17.

### FIGURENBESCHREIBUNG

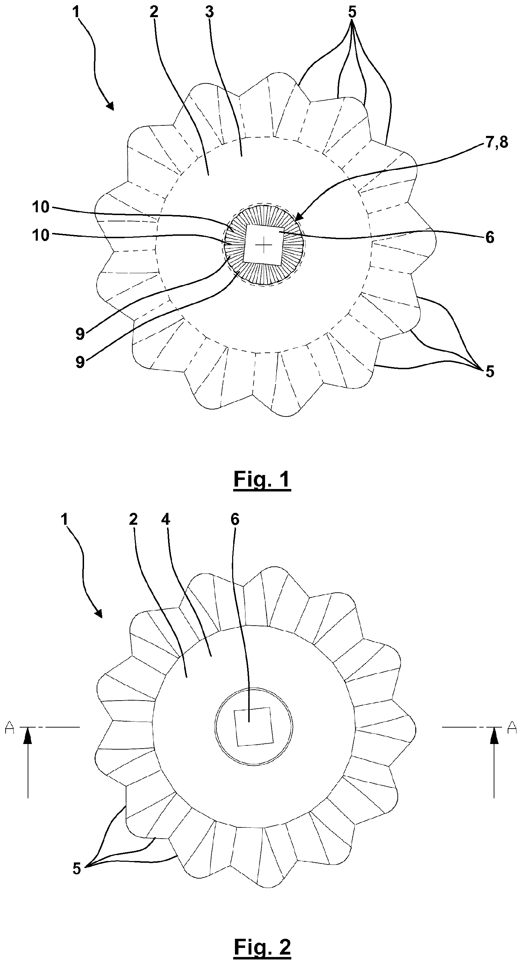

**Fig. 1-4** zeigen verschiedene Ansichten einer ersten beispielhaften Ausführungsform einer neuen Futtermischwagenklinge 1 für ein Misch- und Schneidwerkzeug eines Futtermischwagens. Die Futtermischwagenklinge 1 weist einen Grundkörper 2 auf, der im Wesentlichen flach ausgebildet ist und zwei die wesentliche Oberfläche der Futtermischwagenklinge 1 bildende gegenüberliegende Flächen aufweist, nämlich eine erste Oberfläche 3 und eine zweite Oberfläche 4. Im vorliegenden Beispiel ist der Grundkörper 2 kreisförmig ausgebildet, wobei in seinem radial außenliegenden Bereich eine Mehrzahl von Schneiden 5 gebildet ist. Die Schneiden 5 wurden beispielsweise durch Schleifen an dem Grundkörper 2 angebracht und sind vorzugsweise vergütet, um die notwendige Härte und Verschleißfestigkeit zu erreichen.

Die grundsätzlich kreisförmige Geometrie des Grundkörpers 2 könnte jedoch auch beispielsweise durch eine rechteckige Geometrie ersetzt werden, wobei dann vorzugsweise vier Schneiden 5 an dem Grundkörper 2 angeordnet sind. Andere Ausbildungen des Grundkörpers 2 und der mindestens einen Schneide 5 sind jedoch ebenfalls möglich.

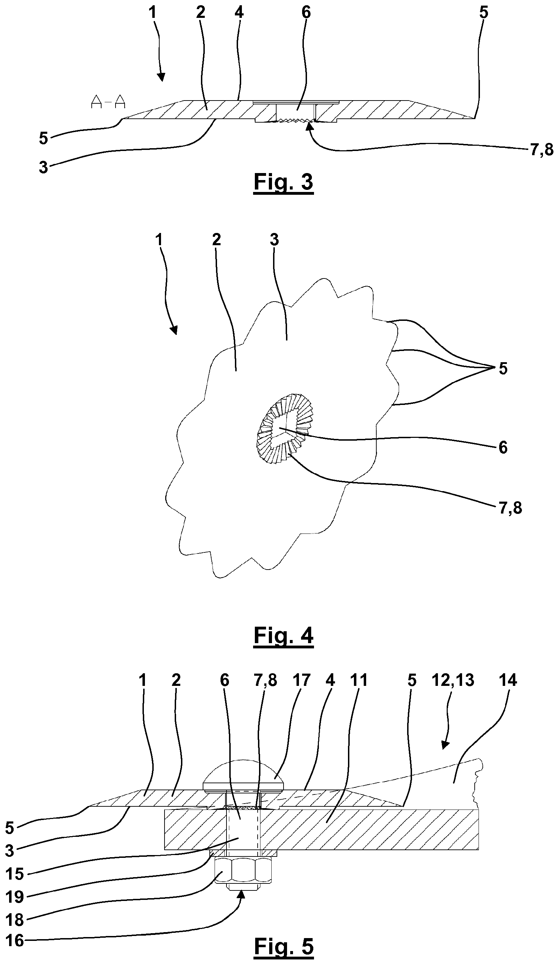

Die Futtermischwagenklinge weist eine Durchbrechung 6 auf, die im vorliegenden Beispiel im Zentrum des Grundkörpers 2 angeordnet ist. Hier weist die Durchbrechung 6 eine rechteckige und insbesondere eine quadratische Gestalt auf, die in bestimmter Weise zur Befestigung der Futtermischwagenklinge 1 an einem Misch- und Schneidwerkzeug eines Futtermischwagens dient, wie dies unterhalb unter Bezugnahme auf Fig. 5 weiter beschrieben wird. Die Durchbrechung 6 könnte jedoch auch eine andere Geometrie besitzen.

Benachbart zu der Durchbrechung 6 ist ein als Verzahnung 7 ausgebildetes Verdrehsicherungselement 8 angeordnet. Das Verdrehsicherungselement 8 ragt hier aus der ersten Oberfläche 3 der Futtermischwagenklinge 1 heraus. Im vorliegenden Ausführungsbeispiel ist das Verdrehsicherungselement 8 unmittelbar anschließend an die Durchbrechung 6 angeordnet. Andere Anordnungen sind jedoch ebenfalls möglich, wie dies weiter unterhalb beschrieben wird.

Das Verdrehsicherungselement 8 weist eine Vielzahl von Zähnen 9 mit spitzen Kanten 10 auf. Die spitzen Kanten 10 der Zähne 9 bilden aus der Oberfläche 3 hervorstehende erhabene Bereiche aus, zwischen denen dann jeweils eine Vertiefung vorhanden ist. Die Kanten 10 könnten aber auch abgerundet sein.

Die Wirkungsweise des neuen Verdrehsicherungselements 8 lässt sich am besten unter Bezugnahme auf die montierte Stellung der Futtermischwagenklinge 1 erläutern, wie diese in **Fig. 5** dargestellt ist. Die Futtermischwagenklinge 1 ist an einem Klingentragekörper 11 eines Misch- und Schneidwerkzeugs 12 eines Futtermischwagens (nicht dargestellt) befestigt. Bei dem Misch- und Schneidwerkzeug 12 handelt es sich im vorliegenden Beispiel um eine Mischschnecke 13 mit einer Wendel 14. Der grundsätzliche Aufbau einer solchen Mischschnecke 13 ist im Stand der Technik bekannt und wird hier im Weiteren deshalb nicht weiter erläutert. Fig. 5 als Schnittdarstellung zeigt lediglich einen Ausschnitt aus der Mischschnecke 13. Es versteht sich, dass die Mischschnecke 13 jedoch deutlich länger ausgebildet ist und eine Vielzahl von Futtermischwagenklingen 1 entlang der Wendel 14 aufweist, wie dies beispielsweise in Fig. 2 der europäischen Patentanmeldung EP 0 612 465 A1 dargestellt ist. Die Wendel 14 kann entweder einen Kern aufweisen oder kernlos ausgebildet sein. Weiterhin kann anstelle der Wendel 14 z. B. eine zylindrische Welle vorhanden sein an der mehrere separate wendelabschnittsförmige Einheiten beabstandet angeordnet sind (so genannte "Paddle-Schnecken").

Die Futtermischwagenklinge 1 ist so im radial äußeren Bereich des Klingentragekörpers 11 des Misch- und Schneidwerkzeugs 12 angeordnet, dass ein Teil über diesen radialen äußeren Rand des Klingentragekörpers 11 hinausragt und somit mit dem zu schneidenden Gut in Kontakt kommen kann. Ein anderer Teil der Futtermischwagenklinge 1 liegt auf dem Klingentragekörper 11 auf. Für die Befestigung der Futtermischwagenklinge 1 an dem Klingentragekörper 11 weist der Klingentragekörper 11 eine Bohrung 15 auf, die sich etwa in axialer Richtung des Misch- und Schneidwerkzeugs 12 erstreckt. Diese Bohrung 15 ist als gewindelose Durchgangsbohrung ausgebildet und dient zum Zusammenwirken mit einem Befestigungsmittel 16 zur Befestigung der Futtermischwagenklinge 1 an dem Misch- und Schneidwerkzeug 12.

Das Befestigungsmittel 16 weist im dargestellten Beispiel eine Schraube 17 mit einem Kopf, einem Schaftabschnitt und einem Gewindeabschnitt auf. Einen weiteren Teil des Befestigungsmittels 16 bildet eine Mutter 18, die auf das Gewinde des Gewindeabschnitts der Schraube 17 aufgeschraubt wird und ein zum Außengewinde der Schraube 17 korrespondierendes Innengewinde aufweist. Einen weiteren Teil des Befestigungsmittels bildet hier eine Unterlegscheibe 19.

Durch dieses Befestigungsmittel 16 - oder ein anderes geeignetes Befestigungsmittel - wird beim Anziehen eine geeignete Montagevorspannkraft so aufgebracht, dass sich das als Verzahnung 7 ausgebildete Verdrehsicherungselement 8 in den Klingentragekörper 11 eingräbt und somit eine kraftschlüssige bzw. kraft- und formschlüssige Verbindung zu diesem herstellt, so dass eine ungewollte Relativbewegung der Futtermischwagenklinge 1 relativ zum Klingentragekörper 11 während des Betriebs des Misch- und Schneidwerkzeugs 12 wirksam verhindert wird. Dabei weist hier der an den Kopf anschließende Schaftabschnitt der Schraube 17 einen zur Geometrie der Durchbrechung 6 korrespondierenden Querschnitt auf, so dass eine Relativbewegung und insbesondere eine Rotation zwischen der Schraube 17 und der Futtermischwagenklinge 1 formschlüssig verhindert wird.

Dabei ist vorzugsweise auch das Verdrehsicherungselement 8 vergütet ausgebildet, so dass es die gewünschte verdrehsichere Verbindung zum Klingentragekörper 11 des Misch- und Schneidwerkzeugs 12 auch bei einem mehrfachen Lösen und Wiederanziehen des Befestigungsmittels 16 zuverlässig herstellt.

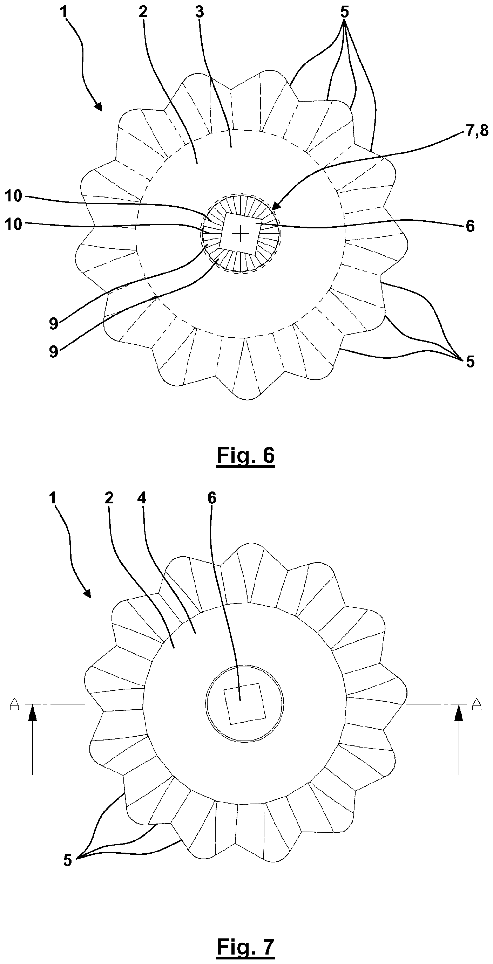

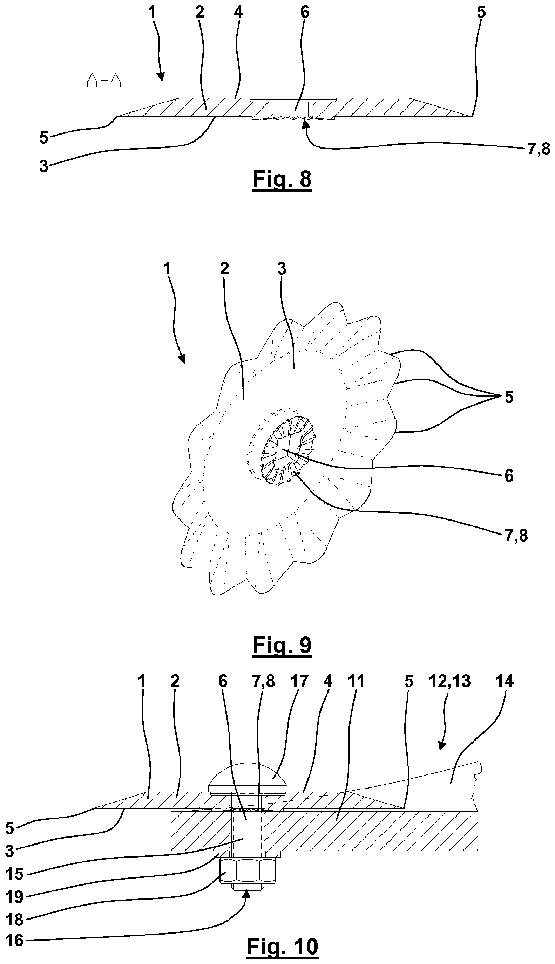

Die **Fig. 6-10** zeigen eine zweite beispielhafte Ausführungsform der neuen Futtermischwagenklinge 1 sowie des neuen Misch- und Schneidwerkzeugs 12 für einen Futtermischwagen. Diese Ausführungsform weist eine Vielzahl von Gemeinsamkeiten mit der in den Fig. 1-5 dargestellten Ausführungsform auf, so dass bezüglich der übereinstimmenden Merkmale auf die oberhalb angegebenen Ausführungen verwiesen wird. Im Unterschied dazu ist die Verzahnung 7 hier grober ausgebildet, d. h. die Zähne 9 weisen eine größere Breite auf.

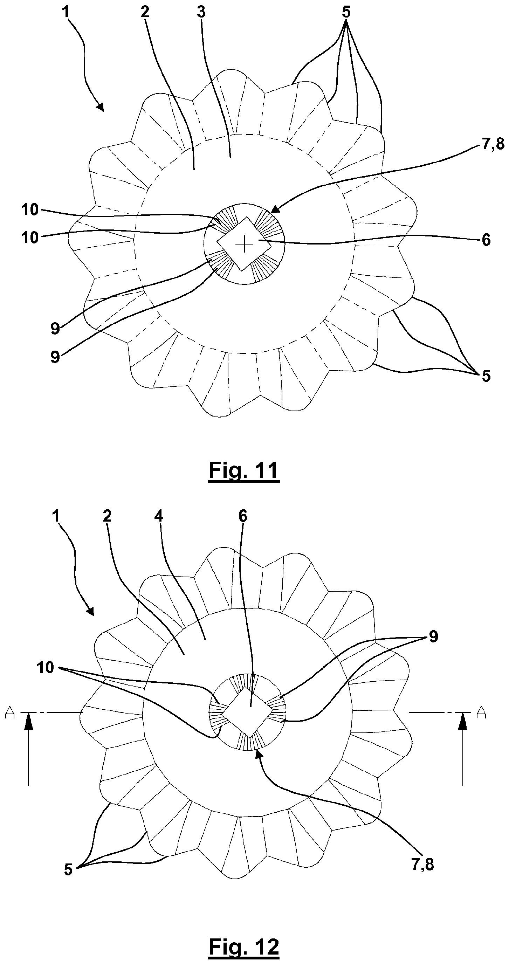

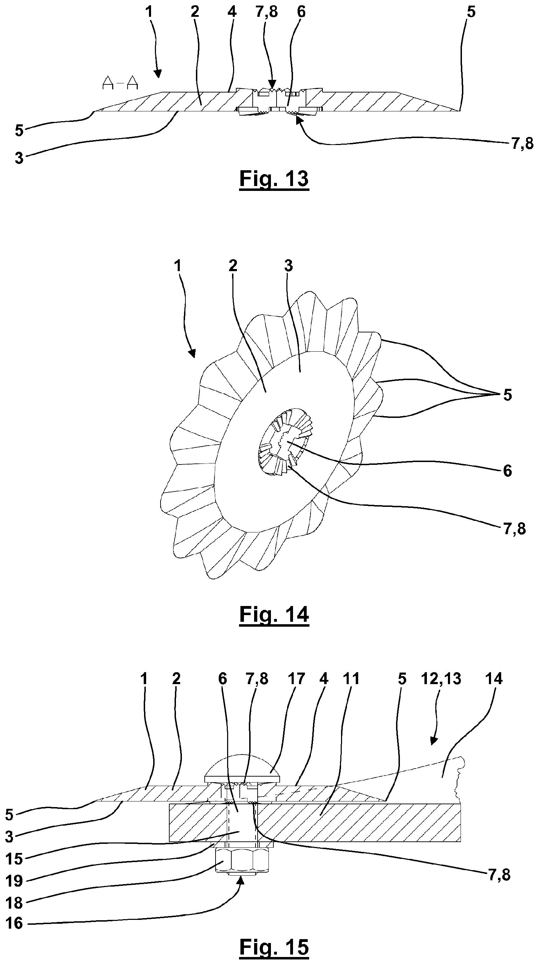

Die **Fig. 11-15** zeigen eine dritte beispielhafte Ausführungsform der neuen Futtermischwagenklinge 1 sowie des neuen Misch- und Schneidwerkzeugs 12 für einen Futtermischwagen. Diese Ausführungsform weist eine Vielzahl von Gemeinsamkeiten mit der in den Fig. 1-5 dargestellten Ausführungsform auf, so dass bezüglich der übereinstimmenden Merkmale auf die oberhalb angegebenen Ausführungen verwiesen wird. Im Unterschied hierzu ist die Verzahnung 7 in diesem Fall als Klauenverzahnung ausgebildet. Das Verdrehsicherungselement 8 ist dabei so ausgebildet, dass es gleichzeitig aus der ersten Oberfläche 3 und der zweiten Oberfläche 4 herausragt. Hierdurch ist es möglich, die Futtermischwagenklinge 1 alternativ sowohl mit ihrer ersten Oberfläche 3 als auch ihrer zweiten Oberfläche 4 an dem Klingentragekörper 11 zu befestigen.

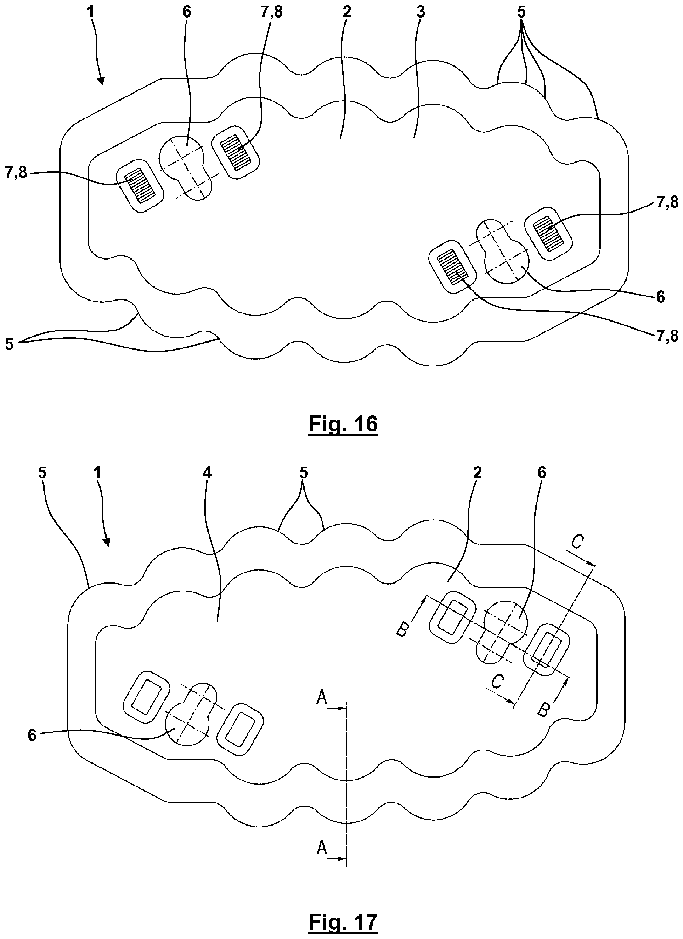

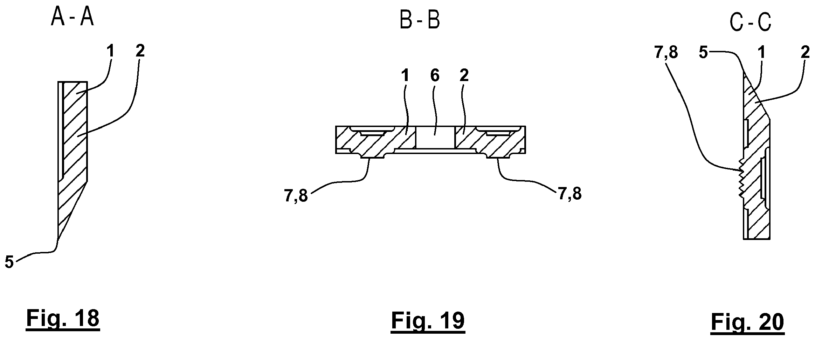

Die **Fig. 16-20** zeigen eine weitere beispielhafte Ausführungsform der neuen Futtermischwagenklinge 1. Der Grundkörper 2 weist hier keine im Wesentlichen runde, sondern eine langgestreckte rechteckige und abgerundete Gestalt mit einer Mehrzahl kreisabschnittsförmiger Schneiden 5 auf. Anstelle einer zentralen Durchbrechung sind hier außermittig zwei Durchbrechungen 6 vorgesehen. Jeder der Durchbrechungen 6 sind wiederum zwei Verdrehsicherungselemente 8 zugeordnet. Die Verdrehsicherungselemente 8 schließen dabei nicht unmittelbar an die jeweilige Durchbrechung 6 an, sondern sind beabstandet dazu angeordnet. Sie sind dennoch benachbart zu der jeweiligen Durchbrechung 6 angeordnet, um in einem Bereich des Klingentragekörpers 11 in der Nähe seiner Bohrung 15 eingreifen zu können.

### BEZUGSZEICHENLISTE

- 1: Futtermischwagenklinge
- 2: Grundkörper
- 3: erste Oberfläche
- 4: zweite Oberfläche
- 5: Schneide
- 6: Durchbrechung
- 7: Verzahnung
- 8: Verdrehsicherungselement
- 9: Zahn
- 10: Kante
- 11: Klingentragekörper
- 12: Misch- und Schneidwerkzeug
- 13: Mischschnecke
- 14: Wendel
- 15: Bohrung
- 16: Befestigungsmittel
- 17: Schraube
- 18: Mutter

## Patentansprüche

1. Futtermischwagenklinge (1) für ein Misch- und Schneidwerkzeug (12) eines Futtermischwagens, mit
einer Durchbrechung (6) für ein Befestigungsmittel (16) zur Befestigung der Futtermischwagenklinge (1) an dem Misch- und Schneidwerkzeug (12) des Futtermischwagens, **gekennzeichnet durch**
ein als Verzahnung (7) ausgebildetes Verdrehsicherungselement (8), welches benachbart zu der Durchbrechung (6) angeordnet ist und aus einer der Oberflächen (3,4) der Futtermischwagenklinge (1) herausragt.

2. Futtermischwagenklinge (1) nach Anspruch 1, **dadurch gekennzeichnet, dass** die Futtermischwagenklinge (1) eine erste Oberfläche (3) und eine zweite Oberfläche (4) aufweist, wobei die erste Oberfläche (3) im montierten Zustand der Futtermischwagenklinge (1) dem Misch- und Schneidwerkzeug (12) zugewandt ist, wobei das Verdrehsicherungselement (8) im Bereich der ersten Oberfläche (3) aus dieser herausragend angeordnet ist.

3. Futtermischwagenklinge (1) nach Anspruch 2, **dadurch gekennzeichnet, dass** ein zweites als Verzahnung (7) ausgebildetes Verdrehsicherungselement (8) im Bereich der zweiten Oberfläche (4) aus dieser herausragend angeordnet ist.

4. Futtermischwagenklinge (1) nach Anspruch 2, **dadurch gekennzeichnet, dass** das Verdrehsicherungselement (8) so ausgebildet ist, dass es gleichzeitig aus der zweiten Oberfläche (4) herausragt.

5. Futtermischwagenklinge (1) nach mindestens einem der vorhergehenden Ansprüche, **dadurch gekennzeichnet, dass** das Verdrehsicherungselement (8) unmittelbar an die Durchbrechung (6) anschließend angeordnet ist.

6. Futtermischwagenklinge (1) nach mindestens einem der vorhergehenden Ansprüche 1 bis 4, **dadurch gekennzeichnet, dass** mehrere Verdrehsicherungselemente (8) vorhanden sind, die beabstandet dennoch benachbart zu der Durchbrechung (6) angeordnet sind.

7. Futtermischwagenklinge (1) nach mindestens einem der vorhergehenden Ansprüche, **dadurch gekennzeichnet, dass** das Verdrehsicherungselement (8) eine Vielzahl von Zähnen (9) mit spitzen Kanten (10) aufweist.

8. Futtermischwagenklinge (1) nach mindestens einem der vorhergehenden Ansprüche, **dadurch gekennzeichnet, dass** das Verdrehsicherungselement (8) vergütet ist.

9. Futtermischwagenklinge (1) nach mindestens einem der vorhergehenden Ansprüche, **dadurch gekennzeichnet, dass** das Verdrehsicherungselement (8) maximal 1,5 mm aus der Oberfläche (3, 4) der Futtermischwagenklinge (1) herausragt.

10. Misch- und Schneidwerkzeug (12) für einen Futtermischwagen, mit
einem Klingentragekörper (11),
einer Mehrzahl von Befestigungsmitteln (16),
einer Mehrzahl von Futtermischwagenklingen (1), wobei die Futtermischwagenklingen (1) jeweils eine Durchbrechung (6) für eines der Befestigungsmittel (16) aufweisen und mit dem jeweiligen Befestigungsmittel (16) an dem Klingentragekörper (11) befestigt sind, **dadurch gekennzeichnet, dass**
die Futtermischwagenklingen (1) jeweils ein als Verzahnung (7) ausgebildetes Verdrehsicherungselement (8) aufweisen, welches benachbart zu der Durchbrechung (6) angeordnet ist, aus einer der Oberflächen (3, 4) der Futtermischwagenklinge (1) herausragt und als Verdrehsicherung (8) an dem Klingentragekörper (11) angreift.

11. Misch- und Schneidwerkzeug (12) nach Anspruch 10, **dadurch gekennzeichnet, dass** das Verdrehsicherungselement (8) nach mindestens einem der vorhergehenden Ansprüche 1 bis 9 ausgebildet ist.

## Claims

1. A fodder mixing vehicle blade (1) for a mixing and cutting tool (12) of a fodder mixing vehicle, comprising:
an opening (6) for a fixing means (16) for fixing the fodder mixing vehicle blade (1) at the mixing and cutting tool (12) of the fodder mixing vehicle, **characterised by**
an anti-rotation element (8) being designed as teeth (7), the anti-rotation element (8) being arranged to be adjacent to the opening (6) and protruding out from one of the surfaces (3, 4) of the fodder mixing vehicle blade (1).

2. The fodder mixing vehicle blade (1) of claim 1, **characterised in that** the fodder mixing vehicle blade (1) includes a first surface (3) and a second surface (4), the first surface (3) in the mounted condition of the fodder mixing vehicle blade (1) facing the mixing and cutting tool (12), the anti-rotation element (8) being arranged in the region of the first surface (3) to protrude out from it.

3. The fodder mixing vehicle blade (1) of claim 2, **characterised in that** a second anti-rotation element (8) being designed as teeth (7) is arranged in the region of the second surface (4) to protrude out from it.

4. The fodder mixing vehicle blade (1) of claim 2, **characterised in that** the anti-rotation element (8) is designed such that it simultaneously protrudes out from the second surface (4).

5. The fodder mixing vehicle blade (1) of at least one of the preceding claims, **characterised in that** the anti-rotation element (8) is arranged directly next to the opening (6).

6. The fodder mixing vehicle blade (1) of at least one of the preceding claims 1 to 4, **characterised in that** there is a plurality of anti-rotation elements (8) being arranged to be spaced apart from, but however adjacent to the opening (6).

7. The fodder mixing vehicle blade (1) of at least one of the preceding claims, **characterised in that** the anti-rotation element (8) includes a multitude of teeth (9) having sharp edges (10).

8. The fodder mixing vehicle blade (1) of at least one of the preceding claims, **characterised in that** the anti-rotation element (8) is hardened and tempered.

9. The fodder mixing vehicle blade (1) of at least one of the preceding claims, **characterised in that** the anti-rotation element (8) protrudes out from the surface (3, 4) of the fodder mixing vehicle blade (1) by maximally 1.5 mm.

10. A mixing and cutting tool (12) for a fodder mixing vehicle, comprising:
a blade carrier body (11),
a plurality of fixing means (16),
a plurality of fodder mixing vehicle blades (1), the fodder mixing vehicle blades (1) each including an opening (6) for fixing one of the fixing means (16) and being fixed at the blade carrier body (11) by the respective fixing means (16), **characterised in that**
the fodder mixing vehicle blades (1) each include an anti-rotation element (8) being designed as teeth (7), the anti-rotation element (8) being arranged to be adjacent to the opening (6), protruding out from one of the surfaces (3, 4) of the fodder mixing vehicle blade (1) and engaging the blade carrier body (11) to prevent rotation.

11. The mixing and cutting tool (12) of claim 10, **characterised in that** the anti-rotation element (8) is designed according to at least one of the preceding claims 1 to 9.

## Revendications

1. Lame de chariot de mélange de fourrage (1) pour un outil de coupe et de mélange (12) d'un chariot de mélange de fourrage, avec
une découpe (6) pour un moyen de fixation (16) destiné à la fixation de la lame de chariot de mélange de fourrage (1) sur l'outil de coupe et de mélange (12) du chariot de mélange de fourrage, **caractérisée par**
un élément anti-rotation (8) constitué en tant que denture (7) qui est disposé au voisinage de la découpe (6) et dépasse d'une des surfaces (3, 4) de la lame de chariot de mélange de fourrage (1).

2. Lame de chariot de mélange de fourrage (1) selon la revendication 1, **caractérisée en ce que** la lame de chariot de mélange de fourrage (1) présente une première surface (3) et une deuxième surface (4), la première surface (3) étant, dans l'état monté de la lame de chariot de mélange de fourrage (1), tournée vers l'outil de coupe et de mélange (12), l'élément anti-rotation (8) étant disposé dans la zone de la première surface (3) en dépassant de celle-ci.

3. Lame de chariot de mélange de fourrage (1) selon la revendication 2, **caractérisée en ce qu'**un deuxième élément anti-rotation (8) constitué en tant que denture (7) est disposé dans la zone de la deuxième surface (4) en dépassant de celle-ci.

4. Lame de chariot de mélange de fourrage (1) selon la revendication 2, **caractérisée en ce que** l'élément anti-rotation (8) est constitué de telle sorte qu'il dépasse simultanément de la deuxième surface (4).

5. Lame de chariot de mélange de fourrage (1) selon au moins l'une des revendications précédentes, **caractérisée en ce que** l'élément anti-rotation (8) est disposé directement à la suite de la découpe (6).

6. Lame de chariot de mélange de fourrage (1) selon au moins l'une des revendications précédentes 1 à 4, **caractérisée par** la présence de plusieurs éléments anti-rotation (8) qui sont disposés à distance de la découpe (6) tout en étant voisinage de celle-ci.

7. Lame de chariot de mélange de fourrage (1) selon au moins l'une des revendications précédentes, **caractérisée en ce que** l'élément anti-rotation (8) présente une multiplicité de dents (9) munies d'arêtes (10) pointues.

8. Lame de chariot de mélange de fourrage (1) selon au moins l'une des revendications précédentes, **caractérisée en ce que** l'élément anti-rotation (8) est traité par trempe et revenu.

9. Lame de chariot de mélange de fourrage (1) selon au moins l'une des revendications précédentes, **caractérisée en ce que** l'élément anti-rotation (8) dépasse au maximum de 1,5 mm de la surface (3, 4) de la lame de chariot de mélange de fourrage (1).

10. Outil de coupe et de mélange (12) pour un chariot de mélange de fourrage, avec
un corps porte-lame (11),
une pluralité de moyens de fixation (16),
une pluralité de lames de chariot de mélange de fourrage (1), les lames de chariot de mélange de fourrage (1) présentant chacune une découpe (6) pour un des moyens de fixation (16) et étant fixées avec le moyen de fixation (16) respectif sur le corps porte-lame (11), **caractérisé en ce que**
les lames de chariot de mélange de fourrage (1) présentent respectivement un élément anti-rotation (8) constitué en tant que denture (7) qui est disposé au voisinage de la découpe (6), dépasse d'une des surfaces (3, 4) de la lame de chariot de mélange de fourrage (1) et agit en tant qu'élément anti-rotation (8) sur le corps porte-lame (11).

11. Outil de coupe et de mélange (12) selon la revendication 10, **caractérisé en ce que** l'élément anti-rotation (8) est constitué selon au moins l'une des revendications précédentes 1 à 9.
